# EUROPEAN PATENT APPLICATION

(11) **EP 2 629 393 A1**
(43) Date of publication of application: **21.08.2013**
(21) Application number: 12000924.6
(22) Date of filing: 14.02.2012
(51) Int. Cl.: H02J 7/00, H04M 1/727

(54) **Anti-theft and anti-counterfeiting device**

(71) Applicant: Ifejika, Oforbike Ignatius, 51067 Köln (DE)
(72) Inventor: Ifejika, Oforbike Ignatius, 51067 Köln (DE)

(57) **Abstract**

It must be noted here that the key factor that makes the functioning of this invention possible is based on the differences that exist in the serial numbers of durable products. It must also be noted here that according to the description of this technology at the on-set, that it is designed to create components and accessories that facilitate the use of these products (mobile devices) and create these components and accesories in a unique way that will make it impossible for counterfeiters to fake or copy.(eg a battery pack or a battery charging adapter made for one particular mobile device can no longer be swapped with the other.) Therefore, a battery pack made for one mobile device can no longer be recharged outside the original accessory or in another set for which it is not designated.

## Description

### AN INNOVATIVE INVENTION

My inention will form an integral part of new generation products (electronic and electrical) that will be manufactured.It will function to modify and improve the way these products will be put into use and will also convey a very high degree of security against theft and counterfeiting of these products.In this description of the function of this technology, I will be mentioning the mobile phone as an example of these products that it will function to protect. However, the same basic principle of function will apply to other products alike including domestic electrical appliances. The mobile phone makes use of AC-DC converters like other pocket-size mobile devices and this makes it a very good example here.

### ANTI-THEFT AND ANTI- COUNTERFEITNG DEVICE

DESCRIPTION (Part 1). We all are aware that all or almost all durable products roll out of the assembly or manufacturing plants, each one with a serial number. We all are also aware that these serial numbers differ,each one from the other by at least one digit.My invention has taken advantage of these differences in the serial numbers of durable products to create a technology that will usher in a total new generation of durable products that will be different in use from the existing ones now.

My invention has created microchips in which serial numbers of durable products are digitally encoded. In the full technical description of this technology,three microchips A, B ,C are created and as I mentiond above, I will be using the mobile phone as example.

The serial number of the mobile phone is digitally encoded in the three microchips. Then the microchips are embeded in the three major components of the mobile phone as follows:microchip(a) is installed in the battery-charging adapter, microchip(b)is installed in the battery pack and linked to the positive pole of the battery and microchip(c)is installed in the mobile phone itself and linked to the phone's central processor.

Functionally speaking, when the mobile phone is plugged on to power source to charge or recharge its battery, the three chips will interact serially to enable the charging of the battery.Microchip(a) will release the information about the phone (the serial number) and passes it on to microchip(b) in the battery pack.Microchip(b) receives the information and matches it with the information it itself is holding and when these tally, the onward transfer of this information continues to microchip(c) which finally transfers the information to the central processor. When the information finally reaches the central processor, the charging of the battery is allowed and in case of any irregularity or any alteration in the information that emmanated from chip (a), the flow of the information is stopped from reaching the central processor and the charging of the battery is disallowed.

From the above explanation of the function of this technology, it can easily be seen that any battery-charging adapter or battery pack made for one mobile phone can not any longer be used on another mobile phone because of the differences in the digits.In other words every mobile phone has now a battery-charging adapter,a battery pack made for it and only for it.

However,one needs not to worry here about the process described above because it is based on digital information processing and it will take seconds to complete just like the compact disc player takes seconds to read the information on the disc.

The above invention functions now with advantages to the original manufacturers of products such as mobile phones and other hand-held mobile gadgets and users as follows:
(a)ANTI COUNTERFEITING :It will be very difficult to counterfeit or fake these products because the serial numbers in which the secret of this technology lies is no longer made visible on the panel of products but are stored away in the manufacturer's databank, to be retrieved if need be. It is obvious here that counterfeiters will try to manufacture external battery charging devices to undermine this technology as is evident in most Asian countries and elsewhere around the world today. But this is only possible when the counterfeiters know the encoded information in the microchips.But no one would try to go through the arduos task of making or producing battery charging adapters serially for millions of mobile phones that are in use in all corners of the world.
(b)ANTI THEFT: When a mobile phone is stolen without the designated battery-charging adapter, the thief has until the last charge in the battery runs out and the phone becomes useless in his hands.This is because the battery pack can not be recharged in another handset or with another AC adapter with different digital encoding. This fact is strongly supported by the fact that people do not always move with their AC adapters and their mobile phones all at the same time.This will result to a reduction in the theft of mobile phones as no one will buy from you if you do not have the corresponding battery pack and charging accesories.
(c)MANUFACTURER'S RIGHTS: The rights of the original manufacturer to his product is now fully restored. This invention gives the original manufacturer the exclusive right to repair or replace any damaged or malfunctioning part of his product.This means that users can no longer buy these products and their accessories from unauthorized dealers.
(e)ENVIROMENTAL ADVANTAGE: Many of these products and their accessories have been faked by unqualified and unauthorized persons without their impacts on the enviroment in mind. However, this invention will funtion to eliminate these enviromental-damaging products and accessories from appearing in the market especially now that the world is thinking and going green. The urgency of this situation has prompted the authorities in the European Union to call on the original manufacturers of these products to take action to streamline their products.

DESCRIPTION (continued part 2). The first part of the description of this invention deals with how it will function to protect pocket-size mobile devices that make use of AC-DC converters with battery packs.However, this technology is not narrowed down to benefit only these products. This second part of the description will deal with how this invetion will work to also protect other products that make use of AC-DC converters without battery packs and AC-only appliances. For this group of products, the same strategy as for products in description part (1) is used. But for products in this part(2) description, only two microchips A and B are created each one holding the information about the serial number of the product. In appliances that make use of AC-DC converters, microchip A is installed in the AC converter and microchip B is installed in the appliance itself and linked to the positive phase of power inlet to the appliance.Functionally, when the DC converter is plugged on to power source and connected to the appliance for use,the flow of electricity causes the microchip A to release the information that it is holding(the serial number of the appliance) which flows into microchip B and the tallying of the information causes the microchip B to allow the inflow of current to the appliance. But in any case whereby the exchange of information does not correspond, microchip B blocks the inflow of current into the appliance.In the above description,we can see that each appliance has a DC converter made for it and there can be no swapping the converters.

This technology is also functioning to protect appliances that run on AC only.In this area, two micro chips A and B are made as in the AC-DC appliances. Microchip A is embeded along the power supply cable of the appliance.When the appliance is plugged on to power source,the flow of electricity activates the flow of the encoded information from chip A into chip B.Microchip B receives the information and tallies it with its own information and when these match,the flow of electricity is allowed into the appliance.This is possible because the positive phase of the appliance is linked to the microchip.

The protection provided by this technology is not only limited to pocket-size devices.It is important here that AC-only appliances are also included because:
(a) several cases of fire outbreak in homes are as a result of melting of substandard power cables made by counterfeiters and unqualified persons, this technology now makes it possible that only original power supply cables with measured current-carrying capacity from the original manufacturer can be used.
(b) when an appliance is considered unsafe for further use,the simple removal of the original power supply cable makes it totally impossible for any second hand user to avoid the risk of fire or electrocution.

Works are still in progress to widen this technology further to include and also give protection to industrial machines.

## Claims

1. Device comprises of microchips.

2. The number of microchips vary depending on the type of appliance in question.

3. The maximum number of microchips applicable so far is three for appliances that make use of battery packs.

4. The minimum number of microchips is two for appliances that make use of AC-DC converters and AC-only appliances.

5. Microchips designed to be capable of holding digital information. Information or alphabets and digits are encoded in the microchips.

6. Exchange and identification of encoded information occur between the microchips.

7. The release and tranfer of encoded information by one chip into another chip occurs as fuse-like function. This enables the flow of electrical current from one component into another. eg. the electrical current that emanated from the battery charging adapter can only flow into the battery pack after the two chips(A and B) have exchanged and tallied encoded information.

8. The control of flow of electrical current is an essential feature of this device because this allows or disallows the charging of the battery, hence, the continued use of the appliance.

9. This device also controls the flow of electrical current in appliances that make use of AC-DC converters and AC-only appliances.
